(19) Europäisches Patentamt / European Patent Office / Office européen des brevets

(11) **EP 3 189 930 B1**

(12) **EUROPEAN PATENT SPECIFICATION**

(45) Date of publication and mention
of the grant of the patent:
**26.08.2020 Bulletin 2020/35**

(21) Application number: **15838210.1**

(22) Date of filing: **02.09.2015**

(51) Int Cl.:
**B23K 35/368** (2006.01)     **B23K 35/30** (2006.01)

(86) International application number:
**PCT/JP2015/074933**

(87) International publication number:
**WO 2016/035813 (10.03.2016 Gazette 2016/10)**

(54) **FLUX CORED WIRE FOR GAS-SHIELDED ARC WELDING**

FLUSSKERNDRAHT FÜR GASABGESCHIRMTES LICHTBOGENSCHWEISSEN

FIL FOURRE POUR LE SOUDAGE A L'ARC SOUS PROTECTION GAZEUSE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **03.09.2014 JP 2014178915**

(43) Date of publication of application:
**12.07.2017 Bulletin 2017/28**

(73) Proprietor: **Kabushiki Kaisha Kobe Seiko Sho (Kobe Steel, Ltd.)**
**Kobe-shi, Hyogo 651-8585 (JP)**

(72) Inventors:
• **HAN Peng**
  **Fujisawa-shi,**
  **Kanagawa 251-8551 (JP)**
• **KAWASAKI Hiroyuki**
  **Fujisawa-shi,**
  **Kanagawa 251-8551 (JP)**
• **KITAGAWA Yoshihiko**
  **Fujisawa-shi, Kangawa 251-8551 (JP)**
• **NAKO Hidenori**
  **Tokyo 141-8688 (JP)**
• **KOCHI Takuya**
  **Kobe-shi,**
  **Hyogo 651-2271 (JP)**
• **URUSHIHARA Wataru**
  **Nagoya-shi,**
  **Aichi 451-0045 (JP)**
• **OKAZAKI Yoshitomi**
  **Kobe-shi,**
  **Hyogo 651-2271 (JP)**

(74) Representative: **Müller-Boré & Partner**
**Patentanwälte PartG mbB**
**Friedenheimer Brücke 21**
**80639 München (DE)**

(56) References cited:
**EP-A1- 1 707 303      EP-A1- 1 769 882**
**EP-A1- 2 374 571      EP-A1- 2 463 053**
**JP-A- 2003 019 595    JP-A- 2004 230 456**
**JP-A- 2007 090 376    JP-A- 2008 149 341**
**JP-A- 2013 151 001**

**Description**

The present invention relates to a flux-cored wire for gas-shielded arc welding. More specifically, the present invention relates to a flux-cored wire for gas-shielded arc welding used for welding of steels with a tensile strength of about 490 to 670 MPa.

Various studies have been conducted on flux-cored wires used when steels with a tensile strength of about 490 to 670 MPa are subjected to gas-shielded arc welding for the purposes of improving welding workability and improving the mechanical properties of weld metals (e.g., refer to PTL 1 and PTL 2).

PTL 1 proposes a flux-cored wire for gas-shielded arc welding in which the wire composition is specified in order to improve all-position welding workability and obtain weld metals having high strength and low-temperature toughness in the as-welded (AW) and post-weld heat-treated (PWHT) conditions. The flux-cored wire described in PTL 1 has a composition that contains, in particular amounts, C, Si, Mn, Ni, B, Mg, V, Ti oxide, metal Ti, Al oxide, metal Al, Si oxide, and metal fluoride and also contains P and Nb in amounts controlled so as to be smaller than or equal to particular amounts, the balance being Fe of a steel sheath, iron powder, an Fe component in iron alloy powder, an arc stabilizer, and incidental impurities.

PTL 2 proposes a flux-cored wire for high tensile steel in which the wire and flux compositions are specified in order to achieve high-efficient all-position welding and obtain weld metals having good cracking resistance and high low-temperature toughness in welding of high tensile steels with a proof stress of 690 MPa or more. Specifically, the flux-cored wire described in PTL 2 has a composition that contains C, Si, Mn, Ni, and Al as essential elements in particular amounts and at least one of Cr, Mo, Nb, and V as a selective element in a particular amount, and also contains $TiO_2$, $SiO_2$, $ZrO_2$, $Al_2O_3$, and a fluorine compound in a flux in particular amounts, the balance being Fe, an arc stabilizer, and incidental impurities. Furthermore, the total hydrogen content in the flux-cored wire is 15 ppm or less. EP2374571 A1 discloses a flux-cored wire for gas shielded arc welding of steels having a tensile strength on the order of 490 to 670 MPa.

PTL 1: Japanese Unexamined Patent Application Publication No. 2012-121051
PTL 2: Japanese Unexamined Patent Application Publication No. 2010-274304

In the development of petroleum and gas and the transport of oil and gas, sour corrosion such as sulfide stress corrosion cracking (SSCC) or hydrogen embrittlement occurs. To address this problem, the Ni content in a weld metal is controlled to 1 mass% or less in the standard (NACE MR0175) of National Association of Corrosion Engineers (NACE).

However, the flux-cored wire in PTL 1 contains 0.1 to 3.0 mass% of Ni to achieve high low-temperature toughness, and thus the Ni content in a weld metal sometimes exceeds 1 mass%. Therefore, the flux-cored wire does not sufficiently meet the requirement of NACE. In the flux-cored wire in PTL 1, studies are not conducted on heat treatment conditions. Therefore, it is unclear whether a weld metal having high proof stress, strength, and low-temperature toughness is obtained even when heat treatment is performed under severer conditions.

The flux-cored wire described in Cited Document 2 also contains 1.0 to 3.0 mass% of Ni and thus does not meet the requirement of NACE. In this flux-cored wire, studies are not conducted on the performance of a weld metal after heat treatment. As in the flux-cored wire in Cited Document 1, it is unclear whether a weld metal having high strength and low-temperature toughness is obtained even when heat treatment is performed under severe conditions.

Accordingly, it is a main object of the present invention to provide a flux-cored wire for gas-shielded arc welding which achieves good welding workability and with which a weld metal having high low-temperature toughness is obtained in both as-welded and heat-treated conditions even when the Ni content is 1 mass% or less.

A flux-cored wire for gas-shielded arc welding according to the present invention is obtained by filling a steel sheath with a flux and contains, relative to a total mass of the wire, C: 0.01 to 0.12 mass%, Si: 0.05 mass% or more and less than 0.30 mass%, Mn: 1.0 to 3.5 mass%, Ni: 0.1 mass% or more and less than 1.0 mass%, Mo: 0.10 to 0.30 mass%, Cr: 0.1 to 0.9 mass%, $TiO_2$: 4.5 to 8.5 mass%, $SiO_2$: 0.10 to 0.40 mass%, $Al_2O_3$: 0.03 to 0.23 mass%, and Fe: 80 mass% or more, wherein a V content is controlled to 0.020 mass% or less relative to the total mass of the wire and a $ZrO_2$ content is controlled to less than 0.02 mass% relative to the total mass of the wire, and wherein the flux-cored wire further comprises (a) to (e) below: (a) 0.2 to 0.7 mass% of Mg relative to the total mass of the wire, (b) 0.05 to 0.30 mass% of Ti relative to the total mass of the wire, (c) 0.05 to 0.30 mass% of a metal fluoride in terms of F relative to the total mass of the wire, (d) 0.01 to 0.30 mass% in total of at least one of a Na compound and a K compound in terms of Na and K relative to the total mass of the wire, and (e) 0.001 to 0.020 mass% in total of at least one of B, a B alloy, and a B oxide in terms of B relative to the total mass of the wire.

A C content [C] in mass%, a Mn content [Mn] in mass%, a Si content [Si] in mass%, a Mo content [Mo] in mass%, and a Cr content [Cr] in mass% relative to the total mass of the wire may satisfy mathematical formula (A) below.
[Math. 1]

$$1.6 \leqq \frac{10 \times [C] + [Mn]}{[Si] + [Mo] + [Cr]} \leqq 5.6 \quad \cdots \quad (A)$$

According to the present invention, good welding workability is achieved and a weld metal having high low-temperature toughness is obtained in both as-welded and heat-treated conditions even when the Ni content is 1 mass% or less. Brief Description of Drawings

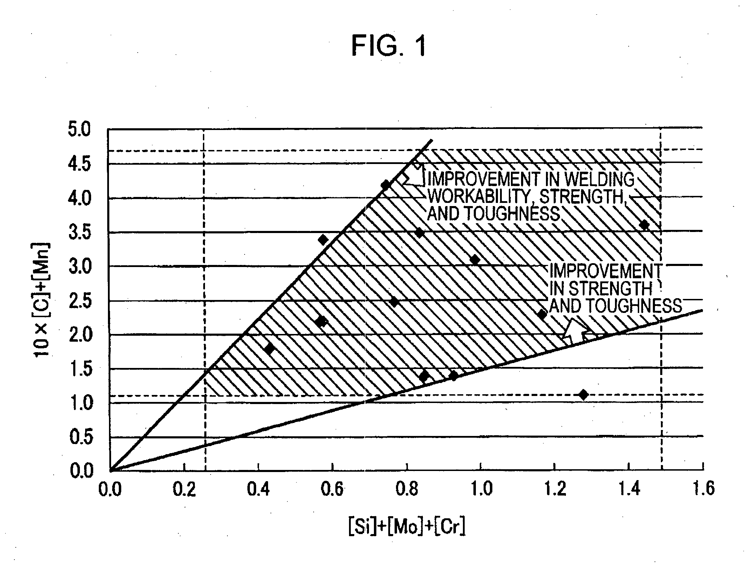

Fig. 1 illustrates an influence of the relationship between the C and Mn contents and the Si, Mo, and Cr contents on the mechanical properties of weld metals.

Hereafter, the present invention will be described in detail.

A flux-cored wire is obtained by filling a steel sheath with a flux and is used for gas-shielded arc welding. The flux-cored wire contains, relative to the total mass of the wire, 0.01 to 0.12 mass% of C, 0.05 mass% or more and less than 0.30 mass% of Si, 1.0 to 3.5 mass% of Mn, 0.1 mass% or more and less than 1.0 mass% of Ni, 0.10 to 0.30 mass% of Mo, 0.1 to 0.9 mass% of Cr, 4.5 to 8.5 mass% of $TiO_2$, 0.10 to 0.40 mass% of $SiO_2$, 0.03 to 0.23 mass% of $Al_2O_3$, and 80 mass% or more of Fe. Note that components other than the above components, that is, the balance in the flux-cored wire is incidental impurities.

The flux-cored wire also contains, for example, Mg, Ti, a metal fluoride, a Na compound, a K compound, B, a B alloy, and a B oxide in addition to the above components. If the flux-cored wire contains V and $ZrO_2$, their contents are controlled.

In the flux-cored wire, the relationship between the C and Mn contents and the Si, Mo, and Cr contents preferably satisfies mathematical formula (A) below. In the mathematical formula (A) below, [C] is a C content in mass% relative to the total mass of the wire, [Mn] is a Mn content in mass% relative to the total mass of the wire, [Si] is a Si content in mass% relative to the total mass of the wire, [Mo] is a Mo content in mass% relative to the total mass of the wire, and [Cr] is a Cr content in mass% relative to the total mass of the wire.

[Math. 2]

$$1.6 \leqq \frac{10 \times [C] + [Mn]}{[Si] + [Mo] + [Cr]} \leqq 5.6 \quad \cdots \quad (A)$$

The content of each component described above can be measured by wet chemical analysis such as a volumetric method or a gravimetric method. For example, C can be measured by an infrared absorption method after combustion; Ti, Si, Zr, Mn, Al, Mg, Ni, Mo, Cr, and B can be measured by ICP emission spectrometry; Na and K can be measured by atomic absorption spectrometry; and F can be measured by neutralization titration.

The outer diameter of the flux-cored wire is not particularly limited, and is generally 1.0 to 2.0 mm and preferably 1.2 to 1.6 mm in a practical manner. The flux filling ratio can be set to any value as long as the wire has a composition that satisfies the above ranges. From the viewpoint of wire drawability and welding workability (e.g., feedability), the flux filling ratio is preferably 10 to 30 mass% relative to the total mass of the wire. Furthermore, the flux-cored wire may have any cross-sectional shape and any internal shape and may be a seamed wire or a seamless wire.

Hereafter, the reasons for placing numerical limitations on components contained in the flux-cored wire will be described. The content of each component is a value relative to the total mass of the wire unless otherwise specified. The effects and the like described in the reasons for numerical limitations are effects and the like common to weld metals both in the as-welded and stress-relieved (SR) conditions unless otherwise specified.

[C: 0.01 to 0.12 mass%]

C is an element required to achieve high strength of weld metals in the as-welded and SR conditions. If the C content is less than 0.01 mass%, such weld metals have insufficient strength and an effect of stabilizing toughness is not sufficiently produced. If the C content is more than 0.12 mass%, the hot cracking resistance of weld metals degrades, and the strength of weld metals excessively increases, which degrades the low-temperature toughness. Therefore, the C content is 0.01 to 0.12 mass%.

The C content is preferably 0.03 mass% or more from the viewpoint of improving the strength and toughness of weld metals, and is preferably 0.10 mass% or less from the viewpoint of improving the hot cracking resistance and low-temperature toughness of weld metals. Note that C may be contained in a flux and/or a steel sheath. Examples of a C source in the flux-cored wire include graphite and C accompanying Fe-Mn and Fe-Si added as flux components and C added to a steel sheath.

[Si: 0.05 mass% or more and less than 0.30 mass%]

Si is also an element required to achieve high strength of weld metals in the as-welded and SR conditions. If the Si content is less than 0.05 mass%, the low-temperature toughness of weld metals degrades because of insufficient deoxidation. If the Si content is 0.30 mass% or more, the amount of Si is excessively increased, and Si is dissolved in ferrite, which increases the strength of matrix ferrite. Consequently, the low-temperature toughness of weld metals, in particular, weld metals after SR degrades. Therefore, the Si content is 0.05 mass% or more and less than 0.30 mass%.
The Si content is preferably 0.08 mass% or more from the viewpoint of increasing a deoxidation effect to improve the low-temperature toughness of weld metals, and is preferably 0.20 mass% or less from the viewpoint of improving the low-temperature toughness of weld metals after SR. Note that Si may be contained in a flux and/or a steel sheath. Examples of a Si source in the flux-cored wire include Fe-Si and Si-Mn added as flux components and Si added to a steel sheath.

[Mn: 1.0 to 3.5 mass%]

Mn is an element that forms an oxide from which a microstructure is generated during welding and that is effective for improving the strength and toughness of weld metals. If the Mn content is less than 1.0 mass%, weld metals have insufficient strength and the toughness degrades. If the Mn content is more than 3.5 mass%, the strength and hardenability are excessively increased, which degrades the toughness of weld metals. Therefore, the Mn content is 1.0 to 3.5 mass%.
The Mn content is preferably 1.2 mass% or more from the viewpoint of improving the strength and toughness of weld metals, and is preferably 3.0 mass% or less from the viewpoint of adjusting the strength and hardenability of weld metals and improving the toughness. Note that Mn may be contained in a flux and/or a steel sheath. Examples of a Mn source in the flux-cored wire include metal Mn, Fe-Mn, and Si-Mn added as flux components and Mn added to a steel sheath.

[Ni: 0.1 mass% or more and less than 1.0 mass%]

In known flux-cored wires, the Ni content relative to the total mass of the wire has been set to 1 mass% or more because Ni is added to weld metals in such an amount that sufficient low-temperature toughness is achieved. However, if a large amount of Ni is contained in weld metals, the susceptibility to sulfide stress corrosion cracking (SSCC) increases in an $H_2S$ environment. Therefore, in the flux-cored wire, the Ni content is decreased to a value lower than the known Ni content to meet the NACE standard.
Specifically, the Ni content is 0.10 mass% or more and less than 1.0 mass%. If the Ni content is less than 0.10 mass%, an effect of improving the toughness of weld metals is not sufficiently produced. If the Ni content is 1.0 mass% or more, weld metals that meet the NACE standard are not obtained, and the hot cracking resistance of weld metals also degrades. The Ni content is preferably 0.30 mass% or more and more preferably 0.50 mass% or more from the viewpoint of improving the toughness of weld metals. To further improve the hot cracking resistance while meeting the NACE standard, the Ni content is preferably 0.95 mass% or less.
Note that Ni may be contained in a flux and/or a steel sheath. Examples of a Ni source in the flux-cored wire include metal Ni and Ni-Mg added as flux components and Ni added to a steel sheath.

[Mo: 0.10 to 0.30 mass%]

Mo is an important element for the flux-cored wire because Mo produces effects of suppressing the coarsening of intergranular carbides and the softening after annealing, and refining a microstructure. If the Mo content is less than 0.10 mass%, weld metals have insufficient strength. If the Mo content is more than 0.30 mass%, the transition temperature of brittle fracture shifts to high temperature, which degrades the toughness of weld metals. Therefore, the Mo content is 0.10 to 0.30 mass%.
The Mo content is preferably 0.15 mass% or more from the viewpoint of improving the strength of weld metals, and is preferably 0.25 mass% or less from the viewpoint of improving the toughness of weld metals. Note that Mo may be contained in a flux and/or a steel sheath. Examples of a Mo source in the flux-cored wire include metal Mo and Fe-Mo added as flux components and Mo added to a steel sheath.

[Cr: 0.1 to 0.9 mass%]

Cr produces an effect of refining intergranular carbides generated during SR. If the Cr content is less than 0.1 mass%, weld metals have insufficient strength, and coarse intergranular carbides present in prior $\gamma$ grain boundaries

are not sufficiently refined, which degrades the toughness of weld metals after SR. If the Cr content is more than 0.9 mass%, the strength and hardenability of weld metals are excessively increased, which degrades the low-temperature toughness. Therefore, the Cr content is 0.1 to 0.9 mass%. The Cr content is preferably 0.2 mass% or more from the viewpoint of improving the strength of weld metals and the toughness of weld metals after SR.

Note that Cr may be contained in a flux and/or a steel sheath. Examples of a Cr source in the flux-cored wire include metal Cr and Fe-Cr added as flux components and Cr added to a steel sheath.

[$TiO_2$: 4.5 to 8.5 mass%]

$TiO_2$ serves as an arc stabilizer and is also a main component of a slagging agent. If the $TiO_2$ content is less than 4.5 mass%, the welding workability degrades, which makes it difficult to perform all-position welding. If the $TiO_2$ content is more than 8.5 mass%, the amount of oxygen in a weld metal increases, which degrades the toughness. Therefore, the $TiO_2$ content is 4.5 to 8.5 mass%. The $TiO_2$ content is preferably 5.5 to 8.0 mass% from the viewpoint of improving the toughness of weld metals. Examples of a $TiO_2$ source in the flux-cored wire include rutile and titanium oxide added as flux components.

[$SiO_2$: 0.10 to 0.40 mass%]

$SiO_2$ produces an effect of providing a good bead shape. If the $SiO_2$ content is less than 0.10 mass%, such an effect is not sufficiently produced, and the bead shape degrades. If the $SiO_2$ content is more than 0.40 mass%, the amount of spatters generated increases. Therefore, the $SiO_2$ content is 0.10 to 0.40 mass%. The $SiO_2$ content is preferably 0.15 mass% or more from the viewpoint of improving the bead shape, and is preferably 0.35 mass% or less from the viewpoint of suppressing generation of spatters. Examples of a $SiO_2$ source in the flux-cored wire include silica, potash glass, and soda glass added as flux components.

[$Al_2O_3$: 0.03 to 0.23 mass%]

$Al_2O_3$ also produces an effect of providing a good bead shape. If the $Al_2O_3$ content is less than 0.03 mass%, such an effect is not sufficiently produced, and the bead shape degrades. If the $Al_2O_3$ content is more than 0.23 mass%, the amount of spatters generated increases. Therefore, the $Al_2O_3$ content is 0.03 to 0.23 mass%. The $Al_2O_3$ content is preferably 0.07 mass% or more from the viewpoint of improving the bead shape, and is preferably 0.19 mass% or less from the viewpoint of suppressing generation of spatters. An Example of an $Al_2O_3$ source in the flux-cored wire is alumina added as a flux component.

[Fe: 80 mass% or more]

For example, in the case of flux-cored wires for all-position welding, if the Fe content is less than 80 mass%, the amount of slag generated is excessively increased, and the bead shape degrades. The Fe content is preferably 82 to 93 mass% from the viewpoint of improving the bead shape. Examples of an Fe source in the flux-cored wire include a steel sheath, and iron powder and an Fe alloy added to a flux.

[$(10 \times C + Mn)/(Si + Mo + Cr)$: 1.6 to 5.6]

In the flux-cored wire, the relationship between the C content, the Mn content, the Si content, the Mo content, and the Cr content is also important in addition to the content of each component. When the wire composition is within the above range, the tensile strength and low-temperature toughness of weld metals and the welding workability can be improved to a certain level. Furthermore, the present inventors have found that when the relationship between the C content, the Mn content, the Si content, the Mo content, and the Cr content satisfies the above-described mathematical formula (A), the tensile strength and low-temperature toughness of weld metals and the welding workability can be further improved.

When $(10 \times [C] + [Mn])/([Si] + [Mo] + [Cr])$ is in the range of 1.6 to 5.6, the hardenability is improved, which increases the tensile strength of weld metals. In addition, since temper embrittlement due to incidental impurities such as P and S, precipitation hardening of fine carbides such as $Mo_2C$, and a decrease in AC1 transformation temperature can be suppressed, the low-temperature toughness of weld metals after SR is improved. Furthermore, generation of coarse carbides in prior $\gamma$ grain boundaries is suppressed. Even if coarse carbides are generated in prior $\gamma$ grain boundaries, they can be refined. Consequently, the tensile strength and low-temperature toughness of weld metals after SR can be improved. The viscosity of a molten pool can also be prevented from decreasing, and thus vertical welding workability is also improved.

If (10 × [C] + [Mn])/([Si] + [Mo] + [Cr]) is less than 1.6, sufficient hardenability is not achieved, which may degrade the tensile strength of weld metals. Furthermore, the temper embrittlement due to incidental impurities such as P and S and the precipitation hardening of fine carbides such as $MO_2C$ are facilitated, which may degrade the low-temperature toughness of weld metals after SR. If (10 × [C] + [Mn])/([Si] + [Mo] + [Cr]) is more than 5.6, the AC1 transformation temperature decreases and the generation of coarse carbides in prior γ grain boundaries is facilitated, which may degrade the low-temperature toughness of weld metals after SR. Furthermore, sufficient hardenability is not achieved, the viscosity in a molten pool decreases, and an effect of refining coarse carbides in prior γ grain boundaries decreases. Consequently, the vertical welding workability and the tensile strength and low-temperature toughness after SR may degrade.

[V: 0.020 mass% or less]

V affects the low-temperature toughness of weld metals after SR, and thus the V content is controlled to 0.020 mass% or less. This improves the low-temperature toughness of weld metals after SR.

[$ZrO_2$: less than 0.02 mass%]

If the wire excessively contains $ZrO_2$, the vertical welding workability may degrade. Therefore, the $ZrO_2$ content is controlled to less than 0.02 mass%. This improves the welding workability. Examples of a $ZrO_2$ source in the flux-cored wire include zircon sand and zirconia.

[Mg: 0.2 to 0.7 mass%]

Mg is a deoxidizing element and produces an effect of improving the toughness of weld metals. If the Mg content is less than 0.2 mass%, a sufficient deoxidizing effect is not achieved and the toughness of weld metals is not improved as desired. If the Mg content is more than 0.7 mass%, the amount of spatters increases, which degrades the welding workability. Therefore, the Mg content is set to 0.2 to 0.7 mass%. Examples of a Mg source in the flux-cored wire include metal Mg, Al-Mg, and Ni-Mg.

[Ti: 0.05 to 0.30 mass%]

Ti also produces an effect of improving the toughness of weld metals. If the Ti content is less than 0.05 mass%, nucleation does not sufficiently occur and the toughness of weld metals is not sufficiently improved. If the Ti content is more than 0.30 mass%, Ti is excessively dissolved, which excessively increases the strength of weld metals and also degrades the toughness. Therefore, the Ti content is set to 0.05 to 0.30 mass%. This provides a weld metal having higher toughness.
Ti may be contained in a flux and/or a steel sheath. Examples of a Ti source in the flux-cored wire include metal Ti and Fe-Ti added as flux components and Ti added to a steel sheath.

[Metal fluoride (in terms of F): 0.05 to 0.30 mass%]

A metal fluoride contributes to stabilizing an arc during welding. If the metal fluoride content in terms of F is less than 0.05 mass%, an effect of stabilizing an arc is small and the amount of spatters generated may increase. If the metal fluoride content in terms of F is more than 0.30 mass%, the bead shape degrades. Therefore, the metal fluoride content in terms of F is set to 0.05 to 0.30 mass%.

[Na compound (in terms of Na), K compound (in terms of K): 0.01 to 0.30 mass% in total]

A Na compound and a K compound can act as an arc stabilizer. If the total content of the Na compound and K compound is less than 0.01 mass% in terms of Na and K, respectively, an effect of stabilizing an arc is small and the amount of spatters generated may increase. If the total content of the Na compound and K compound is more than 0.30 mass% in terms of Na and K, respectively, the bead shape degrades. Therefore, the total content of the Na compound and K compound is set to 0.01 to 0.30 mass% in terms of Na and K, respectively.
For example, sodium fluoride and potassium fluoride are used as a material for fluxes. In the case of potassium fluoride, the fluorine component is calculated in "the metal fluoride content" and the potassium component is calculated in "the Na compound content and the K compound content".

[At least one of B, B alloy (in terms of B), and B oxide (in terms of B): 0.001 to 0.020 mass% in total]

B, B alloys, and B oxides improve the toughness of weld metals. If the total content in terms of B is less than 0.001 mass%, an effect of improving the toughness of weld metals is small. If the total content is more than 0.020 mass%, the hot cracking resistance of weld metals degrades. Therefore, the total content is set to 0.001 to 0.020 mass% in terms of B. This provides a weld metal having higher toughness.

The total content of B, B alloys, and B oxides is preferably 0.003 mass% or more in terms of B from the viewpoint of improving the toughness of weld metals, and is preferably 0.015 mass% or less in terms of B from the viewpoint of the hot cracking resistance of weld metals. Examples of a B source in the flux-cored wire include an Fe-B alloy, an Fe-Si-B alloy, and $B_2O_3$.

[Balance]

The balance in the composition of the flux-cored wire is incidental impurities. Examples of the incidental impurities in the flux-cored wire include V, S, P, Cu, Sn, Na, Co, Ca, Nb, Li, Sb, and As. In addition to the above-described components, the flux-cored wire may contain, for example, a slag forming agent, and an arc stabilizer as long as the advantageous effects of the present invention are not impaired. When the above-described elements are added in the form of an oxide and a nitride, the balance of the flux-cored wire contains O and N.

In the flux-cored wire, the wire components are specified. Therefore, even at a Ni content of 1 mass% or less, a weld metal having high low-temperature toughness is obtained in both the as-welded and heat-treated conditions. This further improves the safety of structures used in a low-temperature environment. In particular, a flux-cored wire which achieves good welding workability and with which a weld metal having high sour resistance and high low-temperature toughness is obtained can be provided in pipe welding for platforms and plants.

Furthermore, when the relationship between the C content, the Mn content, the Si content, the Mo content, and the Cr content satisfies the mathematical formula (A), the transition temperature of brittle fracture of weld metals can be shifted to low temperature and the generation of spatters can be suppressed. Consequently, both the low-temperature toughness and welding workability of weld metals can be further improved.

EXAMPLES

Hereafter, the advantageous effects of the present invention will be specifically described based on Examples of the present invention, Reference Examples, and Comparative Examples. In Examples, a steel sheath made of mild steel was filled with 13 to 20 mass% of a flux to produce flux-cored wires in Examples, Reference Examples, and Comparative Examples having compositions shown in Tables 1 and 2 below. Herein, the wire diameter was 1.2 mm. The wire Nos. 1 to 8 in Table 1 below correspond to Examples, which are within the scope of the present invention. The wire Nos. 9 to 13 in Table 1 correspond to Reference Examples not falling within the scope of the present invention. The wire Nos. 14 to 28 in Table 2 below correspond to Comparative Examples, which are outside the scope of the present invention.

[Table 1]

| | No. | Fe | C | Mn | Si | Cr | Ni | Mo | TiO$_2$ | SiO$_2$ | Al$_2$O$_3$ | Metal fluoride (in terms of F) | ZrO$_2$ | B, B alloy, B oxide (in terms of B) | Ti | Mg | Na compound (in terms of Na) + K compound (in terms of K) | (10*[C]+[Mn])/([Si]+[Mo]+[Cr]) |
|---|---|---|---|---|---|---|---|---|---|---|---|---|---|---|---|---|---|---|
| | | | | | | | | | Wire composition (mass%) | | | | | | | | | |
| Examples and Reference Examples | 1 | 88 | 0.05 | 2.0 | 0.10 | 0.5 | 0.90 | 0.20 | 6.9 | 0.24 | 0.13 | 0.16 | 0 | 0.008 | 0.15 | 0.5 | 0.15 | 3.2 |
| | 2 | 86 | 0.12 | 3.0 | 0.05 | 0.6 | 0.85 | 0.10 | 8.2 | 0.10 | 0.05 | 0.20 | 0.01 | 0.020 | 0.20 | 0.3 | 0.20 | 5.6 |
| | 3 | 84 | 0.01 | 3.5 | 0.25 | 0.9 | 0.95 | 0.30 | 7.8 | 0.40 | 0.23 | 0.30 | 0 | 0.012 | 0.30 | 0.7 | 0.30 | 2.5 |
| | 4 | 91 | 0.07 | 1.5 | 0.20 | 0.1 | 0.70 | 0.25 | 5.4 | 0.17 | 0.03 | 0.05 | 0 | 0.001 | 0.05 | 0.2 | 0.01 | 3.8 |
| | 5 | 91 | 0.04 | 1.0 | 0.29 | 0.4 | 0.10 | 0.16 | 5.9 | 0.20 | 0.05 | 0.10 | 0 | 0.006 | 0.08 | 0.3 | 0.10 | 1.6 |
| | 6 | 86 | 0.11 | 2.0 | 0.11 | 0.7 | 0.99 | 0.18 | 8.5 | 0.10 | 0.07 | 0.06 | 0 | 0.010 | 0.25 | 0.7 | 0.20 | 3.1 |
| | 7 | 92 | 0.03 | 1.5 | 0.07 | 0.3 | 0.55 | 0.10 | 4.5 | 0.30 | 0.05 | 0.08 | 0 | 0.011 | 0.05 | 0.3 | 0.10 | 4.2 |
| | 8 | 90 | 0.07 | 2.7 | 0.20 | 0.2 | 0.65 | 0.18 | 5.3 | 0.17 | 0.03 | 0.05 | 0 | 0.001 | 0.05 | 0.2 | 0.01 | 5.9 |
| | 9 | 86 | 0.05 | 3.0 | 0.13 | 0.5 | 0.80 | 0.21 | 7.7 | 0.30 | 0.20 | 0.00 | 0 | 0.014 | 0.10 | 0.8 | 0.20 | 4.2 |
| | 10 | 89 | 0.01 | 1.0 | 0.28 | 0.8 | 0.90 | 0.20 | 6.5 | 0.20 | 0.15 | 0.10 | 0.10 | 0.000 | 0.10 | 0.6 | 0.10 | 0.9 |
| | 11 | 90 | 0.02 | 2.0 | 0.08 | 0.2 | 0.15 | 0.29 | 5.4 | 0.37 | 0.21 | 0.25 | 0 | 0.030 | 0.50 | 0.3 | 0.20 | 3.9 |
| | 12 | 91 | 0.05 | 1.8 | 0.10 | 0.8 | 0.40 | 0.27 | 5.0 | 0.23 | 0.09 | 0.06 | 0 | 0.010 | 0.00 | 0.2 | 0.00 | 2.0 |
| | 13 | 90 | 0.04 | 1.0 | 0.25 | 0.4 | 0.88 | 0.28 | 5.5 | 0.20 | 0.20 | 0.40 | 0.05 | 0.025 | 0.40 | 0.0 | 0.40 | 1.5 |

[Table 2]

Wire composition (mass%)

| No. | Fe | C | Mn | Si | Cr | Ni | Mo | TiO$_2$ | SiO$_2$ | Al$_2$O$_3$ | Metal fluoride (in terms of F) | ZrO$_2$ | B, B alloy, B oxide (in terms of B) | Ti | Mg | Na compound (in terms of Na) + K compound (in terms of K) | (10*[C]+[Mn])/([Si]+[Mo]+[Cr]) |
|---|---|---|---|---|---|---|---|---|---|---|---|---|---|---|---|---|---|
| 14 | 75 | 0.06 | 1.5 | 0.20 | 0.1 | 0.75 | 0.30 | 21.0 | 0.25 | 0.05 | 0.10 | 0 | 0.013 | 0.20 | 0.3 | 0.04 | 3.6 |
| 15 | 89 | 0 | 1.4 | 0.15 | 0.3 | 0.55 | 0.12 | 6.6 | 0.20 | 0.08 | 0.13 | 0 | 0.020 | 0.10 | 1.0 | 0.11 | 2.5 |
| 16 | 90 | 0.10 | 0 | 0.26 | 0.5 | 0.60 | 0.15 | 7.2 | 0.31 | 0.14 | 0.08 | 0 | 0.004 | 0.09 | 0.3 | 0.05 | 1.1 |
| 17 | 89 | 0.04 | 2.0 | 0 | 0.2 | 0.54 | 0.12 | 7.0 | 0.12 | 0.15 | 0.00 | 0 | 0.020 | 0.10 | 0.5 | 0.04 | 8.0 |
| 18 | 88 | 0.04 | 1.4 | 0.06 | 0 | 0.93 | 0.12 | 8.7 | 0.08 | 0.03 | 0.18 | 0 | 0.003 | 0.10 | 0.1 | 0.05 | 10.0 |
| 19 | 91 | 0.03 | 2.0 | 0.28 | 0.4 | 0 | 0.29 | 4.8 | 0.25 | 0.15 | 0.05 | 0 | 0.008 | 0.12 | 0.4 | 0.05 | 2.4 |
| 20 | 89 | 0.15 | 3.0 | 0.34 | 0.2 | 0.90 | 0 | 5.0 | 0.14 | 0.07 | 0.50 | 0 | 0.003 | 0.16 | 0.3 | 0.05 | 8.3 |
| 21 | 90 | 0.06 | 4.0 | 0.18 | 0.1 | 0.88 | 0.15 | 3.2 | 0.02 | 0.05 | 0.07 | 0 | 0.006 | 0.80 | 0.3 | 0.05 | 11.8 |
| 22 | 88 | 0.06 | 2.1 | 0.40 | 0.3 | 0.64 | 0.26 | 7.4 | 0 | 0.10 | 0.08 | 0 | 0.012 | 0.12 | 0.3 | 0.07 | 2.8 |
| 23 | 87 | 0.05 | 1.2 | 0.20 | 1.2 | 0.66 | 0.13 | 8.0 | 0.25 | 0 | 0.27 | 0.10 | 0.005 | 0.12 | 0.6 | 0.25 | 1.1 |
| 24 | 90 | 0.05 | 1.4 | 0.13 | 0.4 | 1.30 | 0.20 | 5.3 | 0.15 | 0.10 | 0.18 | 0 | 0.012 | 0.16 | 0.4 | 0.00 | 2.6 |
| 25 | 87 | 0.05 | 1.5 | 0.07 | 0.7 | 0.68 | 0.50 | 8.3 | 0.15 | 0.05 | 0.06 | 0 | 0.010 | 0.07 | 0.6 | 0.05 | 1.6 |
| 26 | 85 | 0.07 | 2.0 | 0.07 | 0.1 | 0.68 | 0.40 | 10.4 | 0.06 | 0.09 | 0.08 | 0 | 0.019 | 0.14 | 0.7 | 0.01 | 5.1 |
| 27 | 87 | 0.05 | 3.0 | 0.05 | 0.4 | 0.30 | 0.15 | 6.3 | 0.60 | 0.20 | 0.28 | 0 | 0.020 | 0.20 | 0.2 | 1.00 | 5.8 |
| 28 | 87 | 0.10 | 1.8 | 0.25 | 0.5 | 0.90 | 0.20 | 7.5 | 0.06 | 0.50 | 0.30 | 0 | 0.000 | 0.13 | 0.5 | 0.05 | 2.9 |

Comparative Examples

Subsequently, the following tests for confirming properties were conducted with the flux-cored wires in Examples, Reference Examples, and Comparative Examples.

<All-weld metal welding>

A steel sheet shown in Table 3 below was used as a base material. Gas-shielded arc welding was performed under conditions shown in Table 4 below to obtain a weld metal. The mechanical properties of the weld metal were measured by methods shown in Table 5 below. The balance of the composition of the base material shown in Table 3 below is Fe and incidental impurities. Regarding the mechanical properties, a weld metal having a 0.2% proof stress after SR at 620°C for 8 hours of 500 MPa or more, a tensile strength of 600 MPa or more, and an absorbed energy at -40°C of 70 J or more was evaluated as "Good".

[Table 3]

| Steel type | Sheet thickness | Base material composition (mass%) | | | | | | | | | |
|---|---|---|---|---|---|---|---|---|---|---|---|
| | | C | Si | Mn | P | S | Ni | Cr | Mo | Ti | B |
| JIS G 3106 | 20 mm | 0.15 | 0.32 | 1.34 | 0.010 | 0.001 | 0.01 | 0.03 | - | - | - |

[Table 4]

| Groove shape | 20° V groove, Root gap = 16 mm, with backing strip |
|---|---|
| Shielding gas | 80% Ar-20% $CO_2$, Flow rate = 25 L/min |
| Welding position | Flat |
| Welding conditions | Electric current: 260 to 300 A, Voltage: 28 to 32 V Speed: 25 to 35 cm/min Welding heat input = 1.3 to 2.5 kJ/mm |
| Number of laminated layers | 6 layers 12 passes |
| Preheating and interpass temperature | 140 to 160°C |
| Heat treatment | 620°C $\times$ 8 hours |

[Table 5]

| Tensile test | JIS Z 3111 A2 test specimen, Sampling position = center of weld metal and center of thickness Test temperature: room temperature (20 to 23°C) |
|---|---|
| Impact test | JIS Z 3111 V-notch test specimen Sampling position = center of weld metal and center of thickness Test temperature: -40°C |

<Hot cracking resistance>

The steel sheet shown in Table 3 above was used as a base material. A FISCO test (JIS Z 3155) was performed by gas-shielded arc welding under the conditions shown in Table 6 below to determine the cracking ratio of the obtained weld metal. The cracking ratio refers to a ratio (mass%) of the length of a crack (including a crater crack) to the length of the ruptured bead. Regarding the hot cracking resistance, a weld metal having a cracking ratio of 10 mass% or less was evaluated as "Good".

[Table 6]

| Groove shape | 90° Y groove, Root face = 10 mm, Root gap = 2.4 mm |
|---|---|
| Shielding gas | 80% Ar-20% $CO_2$, Flow rate = 25 L/min |
| Welding position | Flat |
| Welding conditions | 280 A-31 V-35 cm/min |

(continued)

| Groove shape | 90° Y groove, Root face = 10 mm, Root gap = 2.4 mm |
|---|---|
| Number of laminated layers | 1 layer 1 pass |
| Preheating temperature | Room temperature (20 to 23°C) |
| Number of repetitions | 2 |

<Welding workability>

The steel sheet shown in Table 3 above was used as a base material. Gas-shielded arc welding was performed under the conditions shown in Table 7 below to evaluate the welding workability. An evaluation result of "A" was given when the welding workability was excellent. An evaluation result of "B" was given when the welding workability was good. An evaluation result of "C" was given when the welding workability was poor.

[Table 7]

| Groove shape | T-type fillet welding | |
|---|---|---|
| Shielding gas | 80% Ar-20% $CO_2$, Flow rate = 25 L/min | |
| Welding position | (1) Horizontal fillet | |
| | (2) Vertical up fillet | |
| Welding conditions | (1) Horizontal fillet: 280 A-29 V-30 to 50 cm/min | |
| | (2) Vertical up fillet: 210 A-23 V-10 to 15 cm/min | |
| Number of laminated layers | 1 layer 1 pass (both sides were welded) | |
| Preheating temperature | Room temperature to 100°C | |

Table 8 below collectively shows the evaluation results of the mechanical properties, welding workability, and cracking ratio of the weld metals (after SR) obtained using the flux-cored wires in Examples, Reference Examples, and Comparative Examples. The mechanical properties were also evaluated for weld metals in the as-welded condition, and all weld metals obtained by using the flux-cored wires in Examples had the desired values.

[Table 8]

| | Wire No. | Mechanical properties (low-temperature toughness, SR performance) | | | Welding workability | | Hot cracking resistance | Overall evaluation |
|---|---|---|---|---|---|---|---|---|
| | | SR (620°C × 8 hours) | | | Bead shape | Amount of spatters generated | Cracking ratio (%) | |
| | | 0.2% proof stress (MPa) | Tensile strength (MPa) | vE (-40°C) (J) | | | | |
| Examples and Reference Examples | 1 | 561 | 626 | 90 | A | A | 2 | A |
| | 2 | 549 | 639 | 78 | A | A | 5 | A |
| | 3 | 508 | 606 | 105 | A | A | 1 | A |
| | 4 | 576 | 648 | 86 | A | A | 2 | A |
| | 5 | 587 | 656 | 72 | A | A | 3 | A |
| | 6 | 520 | 612 | 110 | A | A | 3 | A |
| | 7 | 568 | 640 | 87 | A | A | 4 | A |
| | 8 | 540 | 628 | 71 | A | A | 2 | B |
| | 9 | 520 | 611 | 70 | A | B | 3 | B |
| | 10 | 504 | 615 | 73 | B | A | 1 | B |
| | 11 | 595 | 685 | 70 | A | A | 9 | B |
| | 12 | 592 | 687 | 75 | B | B | 6 | B |
| | 13 | 502 | 618 | 70 | B | B | 8 | B |
| Comparative Examples | 14 | 560 | 648 | 61 | C | A | 5 | C |
| | 15 | 440 | 500 | 77 | B | B | 6 | C |
| | 16 | 490 | 550 | 52 | A | A | 2 | C |
| | 17 | 510 | 589 | 50 | C | B | 3 | C |
| | 18 | 500 | 570 | 35 | B | A | 7 | C |
| | 19 | 550 | 640 | 50 | A | A | 1 | c |
| | 20 | 460 | 556 | 43 | B | A | 1 | C |
| | 21 | 613 | 743 | 9 | C | B | 3 | C |
| | 22 | 559 | 643 | 38 | C | A | 1 | C |
| | 23 | 548 | 611 | 33 | C | B | 4 | C |
| | 24 | 511 | 632 | 95 | A | B | 30 | C |
| | 25 | 597 | 690 | 30 | A | A | 1 | C |
| | 26 | 550 | 624 | 54 | C | A | 3 | C |
| | 27 | 515 | 600 | 70 | B | C | 2 | C |
| | 28 | 541 | 634 | 88 | C | C | 3 | C |

Fig. 1 illustrates an influence of the relationship between the C and Mn contents and the Si, Mo, and Cr contents in the flux-cored wire on the mechanical properties of weld metals. In Fig. 1, the results of Examples 1 to 8 and Reference Examples 9 to 13 are plotted. As specified in Claim 1, a value of [Si] + [Mo] + [Cr] is in the range of 0.25 to 1.5 and a value of 10 × [C] + [Mn] is in the range of 1.1 to 4.7, and all the plots are positioned within the ranges (a region surrounded by a dotted line in Fig. 1). As illustrated in Fig. 1, when the relationship between the C, Mn, Si, Mo, and Cr contents, that is, (10 × [C] + [Mn])/([Si] + [Mo] + [Cr]) is in the range of 1.6 to 5.6, the welding workability is better and the toughness and strength of the weld metal are higher than those in the case where the relationship is outside the range.

The foregoing results show that the present invention provides a flux-cored wire which achieves good welding workability and with which a weld metal having high low-temperature toughness is obtained in both the as-welded and heat-treated conditions even when the Ni content is 1 mass% or less.

The flux-cored wire for gas-shielded arc welding according to the present invention is suitable for welding of steels with a tensile strength of about 490 to 670 MPa, and is appropriate for, for example, transport equipment and facilities of petroleum and gas.

## Claims

1. A flux-cored wire for gas-shielded arc welding, the flux-cored wire being obtained by filling a steel sheath with a flux and comprising, relative to a total mass of the wire:

   C: 0.01 to 0.12 mass%;
   Si: 0.05 mass% or more and less than 0.30 mass%;
   Mn: 1.0 to 3.5 mass%;
   Ni: 0.1 mass% or more and less than 1.0 mass%;
   Mo: 0.10 to 0.30 mass%;
   Cr: 0.1 to 0.9 mass%;
   $TiO_2$: 4.5 to 8.5 mass%;
   $SiO_2$: 0.10 to 0.40 mass%;
   $Al_2O_3$: 0.03 to 0.23 mass%; and
   Fe: 80 mass% or more,
   wherein a V content is controlled to 0.020 mass% or less relative to the total mass of the wire and a $ZrO_2$ content is controlled to less than 0.02 mass% relative to the total mass of the wire, and
   wherein the flux-cored wire further comprises (a) to (e) below:

   (a) 0.2 to 0.7 mass% of Mg relative to the total mass of the wire,
   (b) 0.05 to 0.30 mass% of Ti relative to the total mass of the wire,
   (c) 0.05 to 0.30 mass% of a metal fluoride in terms of F relative to the total mass of the wire,
   (d) 0.01 to 0.30 mass% in total of at least one of a Na compound and a K compound in terms of Na and K relative to the total mass of the wire, and
   (e) 0.001 to 0.020 mass% in total of at least one of B, a B alloy, and a B oxide in terms of B relative to the total mass of the wire.

2. The flux-cored wire for gas-shielded arc welding according to Claim 1, wherein a C content [C] in mass%, a Mn content [Mn] in mass%, a Si content [Si] in mass%, a Mo content [Mo] in mass%, and a Cr content [Cr] in mass% relative to the total mass of the wire satisfy mathematical formula (A) below.
   [Math. 1]

$$1.6 \leqq \frac{10 \times [C] + [Mn]}{[Si] + [Mo] + [Cr]} \leqq 5.6 \cdots (A)$$

## Patentansprüche

1. Fülldraht zum gasgeschützten Lichtbogenschweißen, wobei der Fülldraht durch Füllen einer Stahlhülle mit einem Flussmittel erhalten wird und, bezogen auf eine Gesamtmasse des Drahts, umfasst:

   C: 0,01 bis 0,12 Massen-%;
   Si: 0,05 Massen-% oder mehr und weniger als 0,30 Massen-%;
   Mn: 1,0 bis 3,5 Massen-%;
   Ni: 0,1 Massen-% oder mehr und weniger als 1,0 Massen-%;
   Mo: 0,10 bis 0,30 Massen-%;

Cr: 0,1 bis 0,9 Massen-%;

$TiO_2$: 4,5 bis 8,5 Massen-%;

$SiO_2$: 0,10 bis 0,40 Massen-%;

$Al_2O_3$: 0,03 bis 0,23 Massen-%; und

Fe: 80 Massen-% oder mehr,

wobei ein V-Gehalt auf 0,020 Massen-% oder weniger, bezogen auf die Gesamtmasse des Drahts, eingestellt ist und ein $ZrO_2$-Gehalt auf weniger als 0,02 Massen-%, bezogen auf die Gesamtmasse des Drahts, eingestellt ist, und

wobei der Fülldraht weiter nachstehende (a) bis (e) umfasst:

(a) 0,2 bis 0,7 Massen-% Mg, bezogen auf die Gesamtmasse des Drahts,

(b) 0,05 bis 0,30 Massen-% Ti, bezogen auf die Gesamtmasse des Drahts,

(c) 0,05 bis 0,30 Massen-% eines Metallfluorids in Bezug auf F, bezogen auf die Gesamtmasse des Drahts,

(d) insgesamt 0,01 bis 0,30 Massen-% von mindestens einem aus einer Na-Verbindung und einer K-Verbindung in Bezug auf Na und K, bezogen auf die Gesamtmasse des Drahts, und

(e) insgesamt 0,001 bis 0,020 Massen-% von mindestens einem aus B, einer B-Legierung und einem B-Oxid in Bezug auf B, bezogen auf die Gesamtmasse des Drahts.

2. Fülldraht zum gasgeschützten Lichtbogenschweißen nach Anspruch 1, wobei ein C-Gehalt [C] in Massen-%, ein Mn-Gehalt [Mn] in Massen-%, ein Si-Gehalt [Si] in Massen-%, ein Mo-Gehalt [Mo] in Massen-% und ein Cr-Gehalt [Cr] in Massen-%, bezogen auf die Gesamtmasse des Drahts, der nachstehenden mathematischen Formel (A) genügen.

[Math. 1]

$$1,6 \leqq \frac{10 \times [C] + [Mn]}{[Si] + [Mo] + [Cr]} \leqq 5,6 \quad \dots \quad (A)$$

## Revendications

1. Fil fourré pour soudage à l'arc sous protection gazeuse, le fil fourré étant obtenu par insertion d'un flux dans une gaine en acier, et comprenant, par rapport à la masse totale du fil :

C : 0,01 à 0,12% en masse ;

Si : 0,05% en masse ou plus et moins de 0,30% en masse ;

Mn : 1,0 à 3,5% en masse ;

Ni : 0,1% en masse ou plus et moins de 1,0% en masse ;

Mo : 0,10 à 0,30% en masse ;

Cr : 0,1 à 0,9% en masse ;

$TiO_2$: 4,5 à 8,5% en masse ;

$SiO_2$ : 0,10 à 0,40% en masse ;

$Al_2O_3$ : 0,03 à 0,23% en masse, et

Fe : 80% en masse ou plus,

où la teneur en V est contrôlée à 0,020% en masse ou moins par rapport à la masse totale du fil et la teneur en $ZrO_2$ est contrôlée à moins de 0,02% en masse par rapport à la masse totale du fil, et

dans lequel le fil fourré comprend en outre (a) à (e) ci-dessous :

(a) 0,2 à 0,7% en masse de Mg par rapport à la masse totale du fil,

(b) 0,05 à 0,30% en masse de Ti par rapport à la masse totale du fil,

(c) 0,05 à 0,30% en masse d'un fluorure métallique en termes de F par rapport à la masse totale du fil,

(d) 0,01 à 0,30% en masse au total d'au moins l'un d'un composé du Na et d'un composé du K en termes de Na et K par rapport à la masse totale du fil, et

(e) 0,001 à 0,020% en masse au total d'au moins l'un de B, un alliage de B et un oxyde de B en termes de B par rapport à la masse totale du fil.

2. Fil fourré pour soudage à l'arc sous protection gazeuse selon la revendication 1, dans lequel la teneur en C [C] en % en masse, la teneur en Mn [Mn] en % en masse, la teneur en Si [Si] en % en masse, la teneur en Mo [Mo] en % en masse et la teneur en Cr [Cr] en % en masse par rapport à la masse totale du fil satisfont la formule mathématique (A) ci-dessous.

[Math.1]

$$1,6 \leq \frac{10 \, x \, [C] + [Mn]}{[Si] + [Mo] + [Cr]} \leq 5,6 \qquad (A)$$

FIG. 1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2374571 A1
- JP 2012121051 A
- JP 2010274304 A